# EUROPEAN PATENT SPECIFICATION

(11) **EP 0 952 425 B1**
(45) Date of publication and mention of the grant of the patent: **22.01.2003**
(21) Application number: 98830241.0
(22) Date of filing: 22.04.1998
(51) Int. Cl.: G01B 3/56, G01B 5/24

(54) **Instrument for taking the bisector of an angle**
Vorrichtung zum Bestimmen einer Winkelhalbierenden
Dispositif pour indiquer la bissectrice d'angle

(43) Date of publication of application: 27.10.1999
(73) Proprietor: Papone, Antonio, 18010 Pietrabruna (Imperia) (IT)
(72) Inventor: Papone, Antonio, 18010 Pietrabruna (Imperia) (IT)
(74) Representative: Tansini, Elio Fabrizio

(56) References cited:
- EP-A- 0 527 120
- IT-Z- 224 314

## Description

The present invention relates to an instrument for taking the bisector of angles, of the type comprising the characteristics expressed in the preamble to claim 1.

In particular the subject instrument is able to be used to detect in a rapid and accurate manner the bisector of the angle of conjunction between two walls or surfaces of constructive elements of any kind, in order subsequently to facilitate the set-up of machines or tools able to cut the ends of socles, frames or similar moulding elements which need to be joined head-to-head in correspondence with the corner formed by the aforesaid walls.

An instrument of the type described above is known from Italian utility model patent no. 224.314, in the name of the same applicant.

Such an instrument essentially comprises an articulated quadrilateral composed by a first and by a second pair of rods mutually hinged at their ends. To the articulated parallelogram is combined a bevel essentially composed by a first and a second arm terminally hinged to each other and provided with locking means, manually operated, to determine mutual fastening according to a pre-set orientation.

The bevel can be removably engaged on the articulated quadrilateral, with the mutual hinging point between the arms of the bevel itself coinciding with a first reference axis corresponding with the hinge between the rods comprising the aforesaid first pair, so that the first arm coincides with one of the rods of the first pair itself. The second arm of the bevel in turn extends according to a direction passing between the aforementioned first reference axis and a second reference axis corresponding to the mutual hinging between the rods of the second pair.

The two arms of the bevel therefore are oriented exactly according to the bisector of the angle formed by the first pair of rods of the articulated quadrilateral.

The instrument can be used bringing the rods of the first pair in contact with the walls in correspondence with the angle formed therebetween.

In this circumstance, the first and the second arm of the bevel are arranged according to a mutual angle corresponding to the bisector of the angle formed between the two walls.

Acting on the locking means, the arms of the bevel are mutually fastened in the orientation corresponding to the bisector of the angle, whereupon the bevel can be removed from the articulated quadrilateral to be employed as reference template, for instance for orienting the blade of a disk saw.

The instrument described above, however, has been found to be subject to improvement in several respects.

It has been noted that, in order to obtain a precise measurement of the bisector, it is important for the removable coupling between the bevel and the articulated quadrilateral to take place with very precise coupling tolerances.

To this end, in the known instrument, the use was proposed of cylindrical pivots set to coincide with the hinge points of the ends of the rods of the first pair, and destined to be axially engaged by corresponding bushings set on the ends of the first arm.

It has, however, been noted that the engagement and the disengagement of the bevel from the articulated quadrilateral is not very practical.

An additional aspect in relation whereto the instruments constructed according to the prior art have been found subject to improvements is represented by the locking means able to attain mutual fastening between the arms of the bevel.

Prior art devices also present some limitations with respect to the possibility of taking the bisector of angles whose amplitude considerably exceeds 180°.

A further drawback that can be noted in prior art devices is given by the impossibility of directly reading the numerical value of the measured angle, and/or of its bisector. The only possible reading is the one physically determined by the arms of the bevel mutually locked according to the angle assumed as a consequence of the first pair of rods of the articulated quadrilateral bearing against the respective walls.

In this situation every reading of the bisector must immediately be followed by the corresponding cutting operations according to the angle measured, to be performed directly on site, before the tool can be used for a new measuring operation.

The object of the present invention is essentially to solve the aforementioned drawbacks, improving the practicality, precision and flexibility of employment of the instrument.

In accordance with the present invention, this object and others besides, which shall become more readily apparent in the course of the present description, are essentially reached by an instrument for taking the bisector of angles, which is characterised in that it comprises the features expressed in the characterising part of claim 1.

Additional features and advantages shall appear from the detailed description of a preferred but not exclusive embodiment of an instrument for taking the bisector of angles, according to the present invention.

The description shall be given hereafter with reference to the accompanying drawings provided purely by way of non limiting indication, wherein:

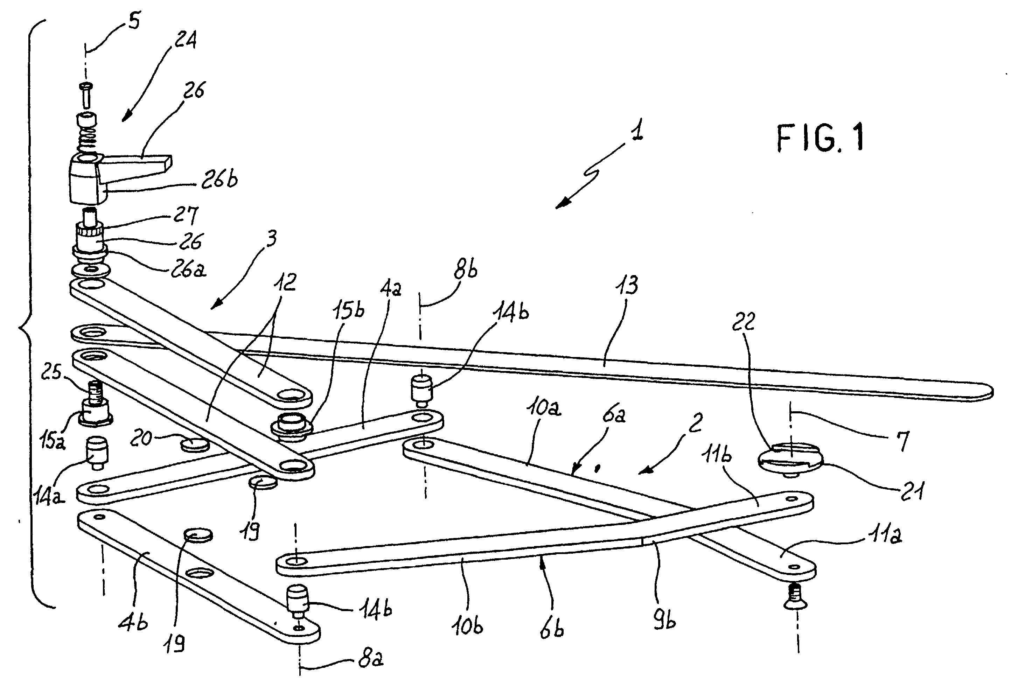

- Figure 1 is an exploded perspective view of an instrument according to the present invention;
- Figure 2 is a perspective view of the instrument under conditions of employment during the measurement of an angle formed by two walls;
- Figure 3 is an interrupted section, performed according to trace III-III in Figure 2, highlighting the mutual coupling means between the bevel and the articulated quadrilateral which comprise the subject instrument, as well as the locking means associated to the bevel;
- Figure 4 is a plan view showing the instrument in an operating condition wherein an angle whose aperture approaches the maximum measurable value is being measured.

With reference to the mentioned figures, the number 1 indicates in its entirety an instrument for taking the bisector of angles, according to the present invention.

The instrument 1 essentially comprises an articulated quadrilateral 2 and a bevel 3 able to be removably engaged on the quadrilateral itself.

The quadrilateral 2 is essentially formed by a first pair of rods 4a, 4b, mutually hinged, in correspondence with their ends, according to a first reference axis 5, and a second pair of rods 6a, 6b of equal length, preferably greater than the length of the first rods 4a, 4b, mutually hinged in correspondence with a second reference axis 7. Each of the rods of the first pair 4a, 4b is terminally hinged from the opposite side to the first reference axis 5, on one end of one of the rods 6a, 6b belonging to the second pair, in correspondence with respective auxiliary hinge axes 8a, 8b, so as to define, all together, the articulated quadrilateral 2.

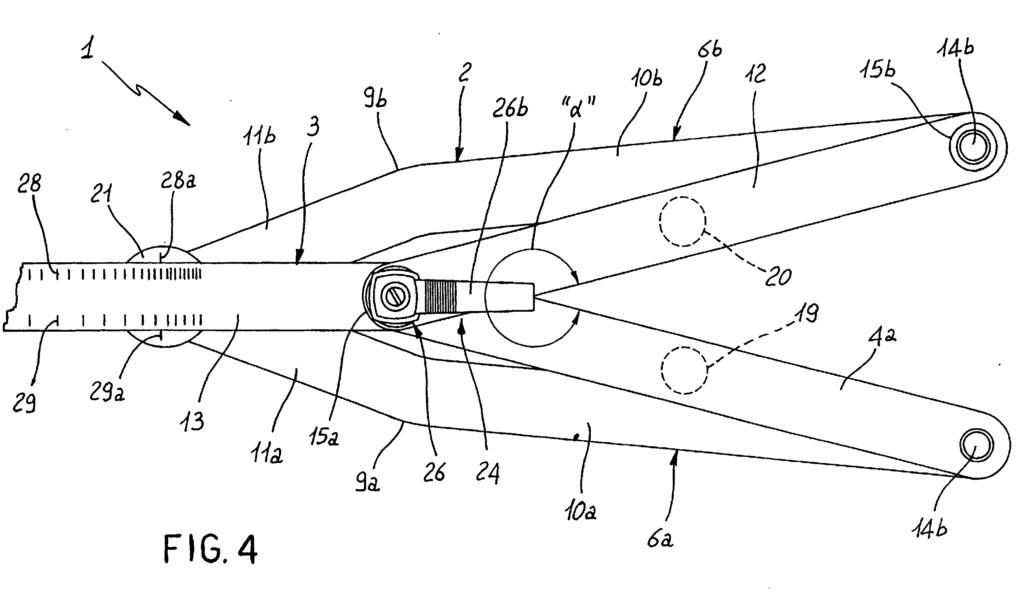

In this way, the first rods can be mutually spread apart until exceeding the value of the straight angle, so that the instrument 1 can be employed also to take the bisector in correspondence with obtuse angles, as in Figure 4.

In accordance with a preferential characteristic of the invention, exploitable even independently from the remaining characteristics, each of the rods 6a, 6b belonging to the second pair, presents, in proximity to the second reference axis 7, a longitudinal cant 9a, 9b which subdivides the development of the rod itself into a first section 10a, 10b extending from the respective auxiliary hinge axis 8a, 8b, and a second section 11a, 11b converging on the second reference axis 7.

The length of the first section 10a, 10b i.e. the distance of the longitudinal cant 9a, 9b from the respective auxiliary hinge axis 8a, 8b, is essentially equal to, and preferably no smaller than, the length of the rods 4a, 4b belonging to the first pair. The presence of the cants 9a, 9b allows considerably to increase the angular excursion of the rods 4a, 4b belonging to the first pair beyond the straight angle, thereby enhancing the versatility of use of the instrument 1. As shown in Figure 4, the instrument 1 can be employed also to measure very acute angles, whereto corresponds a very ample external angle "α", which can reach and exceed values in the order of 330°.

The bevel 3 comprises a first arm 12 and a second arm 13 mutually hinged in correspondence with an articulation 13a set terminally thereto.

To the bevel 3 and to the articulated quadrilateral 2 are further associated mutual coupling means able to allow the removable engagement of the bevel with the quadrilateral itself.

In accordance with the present invention, such coupling means comprise a first pair of connecting elements, preferably constituted by a coupling pin 14a and a centring bushing 15a respectively associated to the articulated quadrilateral 2 and to the bevel 3 coinciding with the first reference axis 5 and with the articulation 13a.

Also provided is at least a second pair of connecting elements, preferably comprising at least a second coupling pin 14b and a second centring bushing 15b, respectively associated to the articulated quadrilateral 2 and to the bevel 3 coinciding with at least one of the auxiliary hinge axes 8a, 8b.

In a preferential solution, to the articulated quadrilateral 2 are associated two of the aforesaid second coupling pins 14b, each to coincide with one of the auxiliary hinge axes 8a, 8b.

Each of the first or second coupling pins 14a, 14b, can be coupled to the respective first or second centring bushing 15a, 15b by-axial sliding, respectively according to the first reference axis 5 and according to the corresponding auxiliary hinge axis 8a, 8b. Once the engagement has taken place, the first arm 12 of the bevel 2 coincides essentially with one or the other of the rods 4a, 4b belonging to the first pair, depending on whether the first centring bushing 15b is engaged on one or the other of the second coupling pins 14b.

In order to ensure a proper and precise positioning of the bevel 3 with respect to the articulated quadrilateral 2, even in the presence of possible debris or impurities on the components of the instrument 1, each of the coupling pins 14a, 14b, presents a cylindrical engagement portion 17 fitted in a coupling seat presented by the respective centring bushing 15a, 15b.

In order to facilitate the insertion and removal of the centring bushings 15a, 15b onto the respective coupling pins 14a, 14b, the axial dimension of the cylindrical engagement portions 17 is to be as small as possible, preferably ranging between 1.5 and 2.5 mm and in any case no larger than 3.5 mm. Also in order to ease the engagement and disengagement of the bevel 3 from the articulated quadrilateral 2, on the continuation of the cylindrical engagement portion 17 of each of the coupling pins 14a, 14b extends a fitting portion 18 of truncated cone conformation.

The cylindrical engagement portion 17 may be wholly absent and the coupling of the pins 14a, 14b may take place in correspondence with truncated cone shaped coupling seats set in the centring bushings 15a, 15b combined with the truncated cone conformation of the fitting portions 18 of the pins themselves.

Also in accordance with the present invention, the aforementioned coupling means further comprise at least one magnet 19, 20 operating between the articulated quadrilateral 2 and the bevel 3, to ensure a satisfactory coupling stability therebetween in spite of the limited axial dimension of the cylindrical engagement portions 17 of the coupling pins 14a, 14b, or the total absence of the cylindrical portions themselves.

In the embodiment shown, wherein the rods 4a, 4b, 6a, 6b of the articulated quadrilateral 2 and the first arm 12 of the bevel 3 are made of non magnetic material, a first magnet 19 is provided, associated to each of the rods 4a, 4b belonging to the first pair and at least a second magnet 20 is also provided, associated to the first arm 12 of the bevel 3 and set to interact with one or the other of the first magnets 19 respectively when the first arm itself is engaged coinciding with one or the other rod 4a, 4b.

The coupling means further comprise a guiding block 21 engaged to the articulated quadrilateral 2 rotationally around the second reference axis 7, and presenting at least one sliding groove 22 wherein is slidingly inserted the second arm 13 of the bevel 3.

Therefore, when the bevel 3 is engaged on the articulated quadrilateral 2, the second arm 13 always extends according to a direction passing through the first reference axis 5 and the second reference axis 7. This direction corresponds to the bisector of the angle "α" formed by the first pair of rods 4a, 4b of the articulated quadrilateral 2.

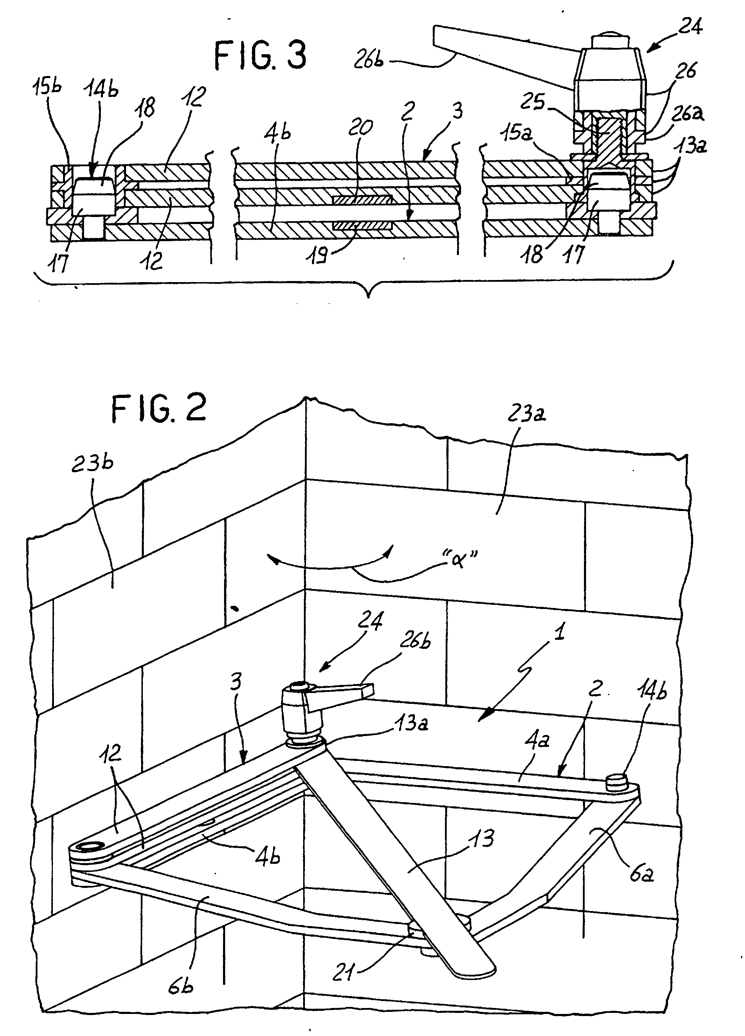

Thus, when the quadrilateral is brought with the rods 4a, 4b belonging to the first pair respectively against two walls 23a, 23b converging in correspondence with an angle (Figure 2), the arms 12, 13 of the bevel 3 will be mutually oriented according to an angle corresponding exactly to the bisector of the angle "α" formed by the two walls.

Locking means 24 associated to the bevel 3 allow to fasten the arms 12, 13 thereof in their mutual position assumed as a result of the measurement operation described above.

In accordance with a further aspect of the invention, also exploitable independently from what is described above, the locking means 24 operate according to an axis coinciding with the articulation between the first and the second arm 12, 13 of the bevel 3, thereby guaranteeing a better locking action between the arms themselves.

More in particular for the locking means 24 the presence is provided of a threaded portion 25 coaxially associated to the first centring bushing 15a set on the bevel 3.

Such threaded portion 25 can be operatively engaged by screwing by a tightening knob 26 preferably composed by a base portion 26a, able to be coupled by screwing to the threaded portion itself, and a grip portion 26b which protrudes radially with respect to the base portion 26a.

Advantageously, the grip portion 26b can be angularly oriented with respect to the geometric axis of the threaded portion 25 and of the base portion 26a. To this end, the grip portion 26b and the base portion 26a can be rigidly fastened in rotational direction by means of a grooved coupling 27 and elastically movable in axial direction to determine the mutual disengagement of the teeth of the grooved coupling itself and allow the rotational orientation of the grip portion 26b.

The possibility of orienting the grip portion 26b angularly allows to perform an effective mutual locking of the arms 12, 13 of the bevel 3 when the instrument 1 bears on the walls 23a, 23b, without the rotation of the knob 26 being hampered by the presence of the walls themselves.

It should be noted that the longitudinal positioning of the second arm 13 of the bevel 3 with respect to the sliding block 21 is directly correlated to the amplitude of the measured angle.

In accordance with an additional independent aspect of the invention, this situation is exploited to provide a direct indication of the value of the measured angle "α".

To this end, on the second arm 13 of the bevel 3 is set at least a first reading scale 28 which, in combination with a reading index 28a set on the sliding block 21, provides the direct indication of the value of the aforementioned angle.

It is also possible to set, also on the second arm 13, a second reading scale 29 which, possibly in combination with a second index 29a, provides the direct indication of the value of the bisector of the measured angle.

The first and the second reading indexes are advantageously aligned along a direction passing through the second reference axis 7, in such a way that the reading values indicated on the scales are not influenced by the sliding block 21.

The present invention attains the proposed objects.

The provisions adopted in the construction of the coupling means allow considerably to facilitate the engagement and disengagement of the bevel from the articulated quadrilateral, without thereby jeopardising the stability of the connection thereof.

The precision of the instrument is enhanced by the reliability of the mutual locking of the arms 12, 13 of the bevel 3 obtained thanks to the particular disposition of the locking means 24.

Moreover, the canted conformation 9a, 9b of the second pair of rods 6a, 6b allows to increase the amplitude of the maximum angle measurable by the instrument 1, to the advantage of the versatility of employment thereof.

The disposition of the graduated scales with the direct indication of the angular values measured further increases the versatility and the practicality of employment of the instrument 1, allowing the execution of different readings without necessarily interposing thereto the corresponding cutting actions with the aid of the bevel 3.

## Claims

1. Instrument to take the bisector of an angle, comprising:
- a deformable quadrilateral (2) comprising a first pair of rods (4a, 4b) consecutively hinged to each other in correspondence with a first reference axis (5) and a second pair of rods (6a, 6b) each hinged to one of the rods (4a, 4b) of said first pair and consecutively hinged to each other in correspondence with a second reference axis (7) opposed, in said quadrilateral (2), to said first reference axis (5), the rods (4a, 4b) of said first pair being hinged respectively to the rods (6a, 6b) of the second pair in correspondence with auxiliary hinge axes (8a, 8b);
- a bevel (3) comprising a first and a second arm (12, 13) mutually hinged in correspondence with an articulation (13a) positioned terminally thereto, and locking means (24) able to be selectively actuated to determine the mutual locking of said first and second arm (12, 13);
- coupling means (14a, 15a, 14b, 15b, 21) to engage removably the bevel (3) to said deformable quadrilateral (2) in such a way that said first arm (12) essentially coincides with a rod (4a, 4b) of said first pair and said second arm (13) corresponds to a diagonal of said articulated quadrilateral (2) passing through said first and second reference axis (5, 7), said coupling means comprising at least one pair of connecting elements (14a, 15a; 14b, 15b) associated respectively to the articulated quadrilateral (2) and to the bevel (3), and able to be mutually coupled by insertion of one into the other according to an axial direction; **characterised by** at least one magnet (19, 20) operating between the articulated quadrilateral (2) and the bevel (3) to generate a force of mutual attraction therebetween when they are in mutual engagement relationship.

2. Instrument according to claim 1, wherein said coupling means comprise:
- at least a first pair (14a, 15a) of said connecting elements, respectively associated to the articulated quadrilateral (2) and to the bevel (3) and able to be mutually coupled by insertion along said first reference axis (5);
- and at least a second pair (14b, 15b) of said connecting elements, associated respectively to the articulated quadrilateral (2) and to the bevel (3) and able to be mutually coupled by insertion according to one of said auxiliary hinge axes (8a, 8b).

3. Instrument according to claim 2, wherein each of said first (14a, 15a) and second pair (14b, 15b) of connecting elements comprises a centring bushing (15a, 15b) and a coupling pin (14a, 14b) respectively associated to the bevel (3) and to the articulated quadrilateral (2).

4. Instrument according to claim 3, wherein each of the coupling pins (14a, 14b) belonging to the first (14a, 15a) and to the second pair (14b, 15b) of connecting elements presents a cylindrical engagement portion (17) fitted in a coupling seat of the respective centring bushing (15a, 15b) and having axial dimension not exceeding 3.5 mm.

5. Instrument according to claim 4, wherein each coupling pin (14a, 14b) presents a truncated cone shaped terminal fitting portion (18) extending from said engagement portion (17).

6. Instrument according to claim 3, wherein each of said coupling pins (14a, 14b) presents truncated cone configuration, each of said centring bushings (15a, 15b) presenting a truncated cone coupling seat united to the respective coupling pin (14a, 14b).

7. Instrument according to claim 1, wherein said coupling means further comprise at least one guiding block (21) associated to the articulated quadrilateral (2) in correspondence with said second reference axis (7) and presenting a sliding groove (22) which removably engages the second arm (13).

8. Instrument according to claim 7, wherein said second arm (13) presents at least a first graduated scale (28) for reading a numerical value of the measured angle, in collimation with at least a first reading index (28a) set on the guiding block (21).

9. Instrument according to claim 7, wherein said second arm (13) presents at least a second graduated scale (29) for reading a numeric value of the bisector of the measured angle, in collimation with at least a second reading index (29b) set on the guiding block (21).

10. Instrument according to claim 1, wherein said locking means (24) operate on an axis coinciding with the articulation between the first and the second arm (12, 13) of the bevel (3).

11. Instrument according to claim 10, wherein said locking means (24) comprise a tightening knob (26) operatively engaged by screwing with a thread (25) presented by the connecting element (15a) associated to the bevel (3) and comprised in said first pair of connecting elements (14a, 15a).

12. Instrument according to claim 11 wherein said tightening knob (23) presents a base portion (26a) able to be coupled by screwing on said thread (25) and a grip portion (26b) protruding radially and able to be oriented angularly with respect to the axis of said thread (25).

13. Instrument according to claim 1, wherein each of the rods (6a, 6b) forming the second pair presents, in proximity to the second reference axis (7), a longitudinal cant (9a, 9b) to converge in the direction of the second reference axis itself (7).

14. Instrument according to claim 13, wherein the longitudinal cant (9a, 9b) is distanced from the respective auxiliary hinge axis (8a, 8b) according to a measure essentially equal to or greater than the length of the rods (4a, 4b) belonging to said first pair.

## Patentansprüche

1. Vorrichtung zum Bestimmen einer Winkelhalbierenden, umfassend:
- ein verformbares Viereck (2), ein erstes Paar von nacheinanderfolgend miteinander im Bereich einer ersten Bezugsachse (5) angelenkten Stangen und ein zweites Paar von jeweils an einer der Stangen (4a, 4b) des ersten Stangenpaares und aneinander nacheinanderfolgend im Bereich einer zweiten, abgewandten Bezugsachse (7) angelenkten Stangen (6a, 6b), wobei im Viereck (2) an der ersten Bezugsachse (5) die Stangen (4a, 4b) des ersten Stangenpaares jeweils an den Stangen (6a, 6b) des zweiten Stangenpaars im Bereich von Hilfsanlenkachsen (8a, 8b) angelenkt sind;
- einen Stellwinkel (3), umfassend einen ersten und einen zweiten Arm (12, 13), die aneinander im Bereich einer endseitig an dieselben angeordneten Anlenkung (13a) angelenkt sind, und Arretiermittel (24), die wahlweise betätigbar sind, um die gegenseitige Arretierung des ersten und des zweiten Armes (12, 13) durchzuführen;
- Kuppelmittel (14a, 15a, 14b, 15b, 21), um den Stellwinkel (3) am verformbaren Viereck (2) derart entfernbar zum Eingriff zu bringen, dass der erste Arm (12) im wesentlichen mit einer Stange (4a, 4b) des ersten Stangenpaar zusammenfällt und der zweite Arm (13) einer Diagonalen des Gelenkviereckes (2) entspricht, die durch die erste und die zweite Bezugsachse (5, 7) geht, wobei die Kuppelmittel mindestens ein Paar von Verbindungselementen (14a, 15a, 14b, 15b) umfasst, die jeweils dem Gelenkviereck (2) und dem Stellwinkel (3) zugeordnet sind und miteinander durch gegenseitiges Einstecken gemäß einer axialen Richtung kuppelbar sind, **gekennzeichnet durch** mindestens ein Magnet (19, 20), das zwischen dem Gelenkviereck (2) und dem Stellwinkel (3) wirkt, um eine gegenseitige Anziehungskraft zwischen denselben zu erzeugen, wenn sie sich im gegenseitigen Eingriff befinden.

2. Vorrichtung nach Anspruch 1, in der die Kuppelmittel umfassen:
- mindestens ein Paar (14a, 15a) der Verbindungselemente, die jeweils dem Gelenkviereck (2) und dem Stellwinkel (3) zugeordnet und miteinander durch Einstecken längs der ersten Bezugsachse (5) kuppelbar sind;
- und mindestens ein zweites Paar (14b, 15b) der Verbindungselemente, die jeweils dem Gelenkviereck (2) und dem Stellwinkel (3) zugeordnet und miteinander durch Einstecken gemäß einer der Hilfsanlenkachsen (8a, 8b) kuppelbar sind.

3. Vorrichtung nach Anspruch 2, in der jedes erstes (14a, 15a) und zweites Paar (14b, 15b) von Verbindungselementen eine Zentrierbüchse (15a, 15b) und einen Einsteckbolzen (14a, 14b) umfasst, die jeweils dem Stellwinkel (3) und dem Gelenkviereck (2) zugeordnet sind.

4. Vorrichtung nach Anspruch 3, in der jeder der, dem ersten (14a, 15a) und dem zweiten Paar (14b, 15b) von Verbindungselementen angehörenden Einsteckbolzen (14a, 14b) einen zylindrischen Eingriffsabschnitt (17) aufweist, der mit einer Kuppelaufnahme der entsprechenden Zentrierbüchse (15a, 15b) zusammenwirkt und eine Axialabmessung nicht über 3,5 mm besitzt.

5. Vorrichtung nach Anspruch 4, in der jeder Einsteckbolzen (14a, 14b) einen kegelförmigen, einladenden Endabschnitt (18) umfasst, der sich vom Eingriffsabschnitt (17) erstreckt.

6. Vorrichtung nach Anspruch 3, in der jeder der Einsteckbolzen (14a, 14b) eine kegelstumpfförmige Ausbildung aufweist, wobei jede der Zentrierbüchsen (15a, 15b) eine kegelstumpfförmige Kuppelaufnahme aufweist, die mit dem entsprechenden Einsteckbolzen (14a, 14b) zusammenwirkt.

7. Vorrichtung nach Anspruch 1, bei der die Kuppelmittel überdies mindestens einen Führungsblock. (21) umfassen, der dem Gelenkviereck (2) im Bereich der ersten Bezugsachse (7) zugeordnet ist und eine Gleitnut (22) aufweist, die den zweiten Arm (13) abnehmbar ergreift.

8. Vorrichtung nach Anspruch 7, bei der der zweite Arm (13) mindestens eine erste Skala (28) zum Lesen eines erfassten Zahlenwertes der Winkelhalbierenden in: Kollimation mit mindestens einem Leserzeiger (28a) aufweist, der am Führungsblock (21) bereitgestellt ist.

9. Vorrichtung nach Anspruch 7, bei der der zweite Arm (13) mindestens eine zweite Skala (29) zum Lesen eines erfassten Zahlenwertes der Winkelhalbierenden in Kollimation mit mindestens einem zweiten Lesezeiger (29b) aufweist, der am Führungsblock (21) bereitgestellt ist.

10. Vorrichtung nach Anspruch 1, bei der die Arretiermittel (24) auf eine Achse wirken, die mit der Anlenkung zwischen dem ersten und den zweiten Arm (12, 13) des Stellwinkels (3) zusammenfällt.

11. Vorrichtung nach Anspruch 10, bei der die Arretiermittel (24) einen Spannknopf (26) umfassen, der durch Verschraubung mit einem Gewinde (25) wirksam in Eingriff steht, das das Verbindungselement (15a) aufweist, das dem Stellwinkel (3) zugeordnet ist und dem ersten Paar von Verbindungselementen (14a, 15a) angehört.

12. Vorrichtung nach Anspruch 11, bei der der Spannknopf (23) einen Basisabschnitt (26a) aufweist, der zur Verschraubung mit dem Gewinde (25) koppelbar ist, und einen Griffabschnitt (26b), der radial und im Winkel ausrichtbar gegenüber der Achse des Gewindes (25) vorsteht.

13. Vorrichtung nach Anspruch 1, bei der jede der das zweite Stangenpaar bildenden Stangen (6a, 6b) in der Nähe der zweiten Bezugsachse (7) einen Längsknick (9a, 9b) aufweist, der in Richtung der zweiten Bezugsachse selbst (7) zusammenläuft.

14. Vorrichtung nach Anspruch 13, bei der der Längsknick (9a, 9b) von der entsprechenden Hilfsanlenkachse (8a, 8b) gemäß einem Maß, im wesentlichen gleich oder größer als die Länge der dem ersten Stangenpaar angehörenden Stangen (4a, 4b).

## Revendications

1. Dispositif pour indiquer la bissectrice d'un angle, comprenant:
- un quadrilatère déformable (2) comportant une première paire de tiges (4a, 4b) articulées consécutivement l'une sur l'autre à un premier axe de référence (5) et une deuxième paire de tiges (6a, 6b) dont chacune est articulée sur l'une des tiges (4a, 4b) de ladite première paire et lesquelles sont articulées l'une sur l'autre à un deuxième axe de référence (7) opposé, dans ledit quadrilatère (2) audit premier axe de référence (5), les tiges (4a, 4b) de ladite première paire étant articulées respectivement sur les tiges (6a, 6b) de la deuxième paire à des axes d'articulation auxiliaires (8a, 8b);
- une fausse équerre (3) comprenant un premier et un deuxième bras (12,13) montés réciproquement à pivotement en correspondance avec une articulation (13a) positionnée à la fin de ces derniers, et des moyens de blocage (24) en mesure d'être mis en mouvement sélectivement pour déterminer le blocage réciproque desdits premier et deuxième bras (12, 13);
- des moyens d'accouplement (14a, 15a, 14b, 15b, 21) pour engager de manière amovible la fausse équerre (3) audit quadrilatère déformable (2) de telle sorte que ledit premier bras (12) coïncide essentiellement avec une tige (4a, 4b) de ladite première paire et ledit deuxième bras (13) correspond à une diagonale dudit quadrilatère articulé (2) passant par lesdits premier et deuxième axes de référence (5, 7), lesdits moyes d'accouplement comprenant au moins une paire d'éléments de liaison (14a, 15a; 14b, 15b) associés respectivement au quadrilatère articulé (2) et à la fausse équerre (3), et susceptibles d'être couplés réciproquement par insertion d'un élément dans l'autre suivant une direction axiale; **caractérisé par** au moins un aimant (19, 20) opérant entre le quadrilatère articulé (2) et la fausse équerre (3) pour engendrer une force d'attraction réciproque entre ceux-ci quand ils sont en relation d'engagement réciproque.

2. Dispositif selon la revendication 1, dans lequel lesdits moyens d'accouplement comportent:
- au moins une première paire (14a, 15a) desdits éléments de liaison, associés respectivement au quadrilatère articulé (2) et à la fausse équerre (3) et susceptibles d'accouplement réciproque par insertion le long dudit premier axe de référence (5);
- et au moins une deuxième paire (14b, 15b) desdits éléments de liaison, associés respectivement au quadrilatère articulé (2) et à la fausse équerre (3) et susceptibles d'accouplement réciproque par insertion suivant un desdits axes auxiliaires d'articulation (8a, 8b).

3. Dispositif selon la revendication 2, dans lequel chacune desdites première (14a, 15a) et deuxième (14b, 15b) paires d'éléments de liaison comporte une douille de centrage (15a, 15b) et un goujon d'accouplement (14a, 14b) associés respectivement à la fausse équerre (3) et au quadrilatère articulé (2).

4. Dispositif selon la revendication 3, dans lequel chacun des goujons d'accouplement (14a, 14b) appartenant à la première paire (14a, 15a) et à la deuxième paire (14b, 15b) d'éléments de liaison présente une portion d'engagement cylindrique (17) insérée dans un logement d'accouplement de la douille de centrage respective (15a, 15b) et ayant une dimension axiale ne dépassant pas 3,5 mm.

5. Dispositif selon la revendication 4, dans lequel chaque goujon d'accouplement (14a, 14b) présente une portion terminale d'emboîtement en forme de tronc de cône (18) s'étendant à partir de ladite portion d'engagement (17).

6. Dispositif selon la revendication 3, dans lequel chacun desdits goujons d'accouplement (14a, 14b) présente une configuration en tronc de cône, chacune desdites douilles de centrage (15a, 15b) présentant un logement d'accouplement tronconique uni au goujon d'accouplement respectif (14a, 14b).

7. Dispositif selon la revendication 1, dans lequel lesdits moyens d'accouplement comportent en outre au moins' un bloc de guidage (21) associé au quadrilatère articulé (2) en correspondance avec ledit deuxième axe de référence (7) et présentant une rainure de coulissement (22) engageant le deuxième bras (13) de manière amovible.

8. Dispositif selon la revendication 7, dans lequel ledit deuxième bras (13) présente au moins une première échelle graduée (28) pour lire une valeur numérique de l'angle mesuré, en collimation avec au moins un premier index de lecture (28a) prévu sur le bloc de guidage (21).

9. Dispositif selon la revendication 7, dans lequel ledit deuxième bras (13) présente au moins une deuxième échelle graduée (29) pour lire une valeur numérique de la bissectrice de l'angle mesurée, en collimation avec au moins un deuxième index de lecture (29b) prévu sur le bloc de guidage (21).

10. Dispositif selon la revendication 1, dans lequel lesdits moyens de blocage (24) opèrent sur un axe coïncidant avec l'articulation entre le premier et le deuxième bras (12, 13) de la fausse équerre (3).

11. Dispositif selon la revendication 10, dans lequel lesdits moyens de blocage (24) comportent un bouton de serrage (26) engagé de manière opérante par vissage à un filetage (25) présenté par l'élément de liaison (15a) associé à la fausse équerre (3) et faisant partie de ladite première paire d'éléments de liaison (14a, 15a).

12. Dispositif selon la revendication 11, dans lequel ledit bouton de serrage (23) présente une portion de base (26a) susceptible d'accouplement par vissage sur ledit filetage (25) et une portion de préhension (26b) faisant saillie en sens radial et susceptible d'orientation angulaire par rapport à l'axe dudit filetage (25).

13. Dispositif selon la revendication 1, dans lequel chacune des tiges (6a, 6b) formant la deuxième paire présente, à proximité du deuxième axe de référence (7), un dévers destiné à converger en direction du deuxième axe de référence lui-même (7).

14. Dispositif selon la revendication 13, dans lequel le dévers longitudinal (9a, 9b) est éloigné de l'axe d'articulation auxiliaire respectif (8a, 9b) d'une mesure essentiellement égale ou supérieure à la longueur des tiges (4a, 4b) appartenant à ladite première paire.
